(19) **Europäisches Patentamt**

**European Patent Office**

**Office européen des brevets**

(11) Publication number: **0 173 400**
**B1**

(12) # EUROPEAN PATENT SPECIFICATION

(45) Date of publication of patent specification: **28.06.89**

(51) Int. Cl.⁴: **A 01 B 3/42,** A 01 B 15/14

(21) Application number: **85201333.3**

(22) Date of filing: **20.08.85**

(54) A plough.

(30) Priority: **24.08.84 NL 8402585**

(43) Date of publication of application:
**05.03.86 Bulletin 86/10**

(45) Publication of the grant of the patent:
**28.06.89 Bulletin 89/26**

(84) Designated Contracting States:
**DE FR GB IT NL SE**

(56) References cited:
**DE-A-3 218 631**
**DE-B-1 191 152**
**FR-A-2 028 763**
**FR-A-2 517 505**
**FR-A-2 523 398**
**GB-A-2 119 614**
**GB-A-2 122 464**
**US-A-1 547 291**
**US-A-4 030 552**
**US-A-4 141 419**

(73) Proprietor: **Texas Industries Inc.**
**15 Pietermaai**
**Willemstad Curaçao Netherlands Antilles (NL)**

(72) Inventor: **Van der Lely, Cornelis**
**7 Brüschenrain**
**Zug (CH)**

(74) Representative: **Mulder, Herman et al**
**Octrooibureau Van der Lely N.V. Weverskade 10**
**P.O. Box 26**
**NL-3155 ZG Maasland (NL)**

Courier Press, Leamington Spa, England.

## Description

This invention relates to a plough comprising a main frame beam, to which a plurality of plough bodies is pivotally attached and which is adjustably connected to a transverse frame beam that can be coupled to a tractor, said connection between the main frame beam and the transverse frame beam being formed by a link pivotally attached about a first upwardly extending axis at or near one end of the transverse beam and a second upwardly extending axis at the main frame beam, said plough further comprising a control beam that is pivotally connected at its front end to the transverse beam at or near the end away from the pivotal connection between the pivotal link and the transverse beam and at its rear end to an adjusting mechanism for simultaneously adjusting the orientation of the plough bodies when the working width of the plough is changed by varying the inclination of the main frame beam with respect to the intended direction (A) of operative travel of the plough.

A plough of the kind set forth is known from the UK patent application 2 122 464.

This patent application concerns a plough comprising a main frame beam to which a plurality of plough bodies is attached, which plough bodies are pivotable about an upwardly extending axis. The said main frame beam is adjustable with respect to a transverse beam that can be coupled to a tractor to vary its inclination with respect to the intended direction of operative travel of the plough, thereby causing the plough bodies to pivot about the said upwardly extending axis. With this known construction the forward part of the frame beam is connected to a transverse support by means of two substantially parallel struts that extend near each other, the arrangement being such that, during operation, almost all the reaction forces are exerted on the said forward coupling of the beam which, in particular when ploughing heavy soil, can easily result in deformation of the same, so that an exact adjustment of the frame beam no longer can be achieved.

The UK patent application 2 119 614 relates to a plough, whereby a number of plough bodies is pivotally connected to a main frame beam which near its middle, by means of a draft beam, is pivotally connected to a transverse beam that can be coupled to a tractor. The coupling point of the drag beam on the transverse beam is disposed near the middle of same, whereas the front end of the main frame beam can be adjusted by means of a turnbuckle that is connected with its other end to a support on the said transverse frame beam, in order to cause an adjustment of the plough bodies.

The invention has for its object to provide an adjustable support of the main frame beam, which forms a reliable connection, even when strong forces are acting on this connection during the working of wet and heavy soils.

In accordance with the invention the rear end of the link is connected to the main frame beam at the front end thereof and the control beam in addition is pivotally connected at its rear end to the main frame beam by an intermediate arm at a position approximately midway along the length of the said main frame beam. With this constructive suggestion a reliable, adjustable support of the main frame beam is achieved, which support can effectively deal with the forces acting on the main frame beam during operation of the plough.

For a better understanding of the present invention and to show how it may be carried into effect, reference will now be made, by way of example, to the accompanying drawings, in which:

Figure 1 is a plan view of a multi-share, reversible plough in a configuration providing a maximum working width;

Figure 2 is a side view of the plough of Figure 1;

Figure 3 is a plan view of the plough in a configuration providing a minimum working width;

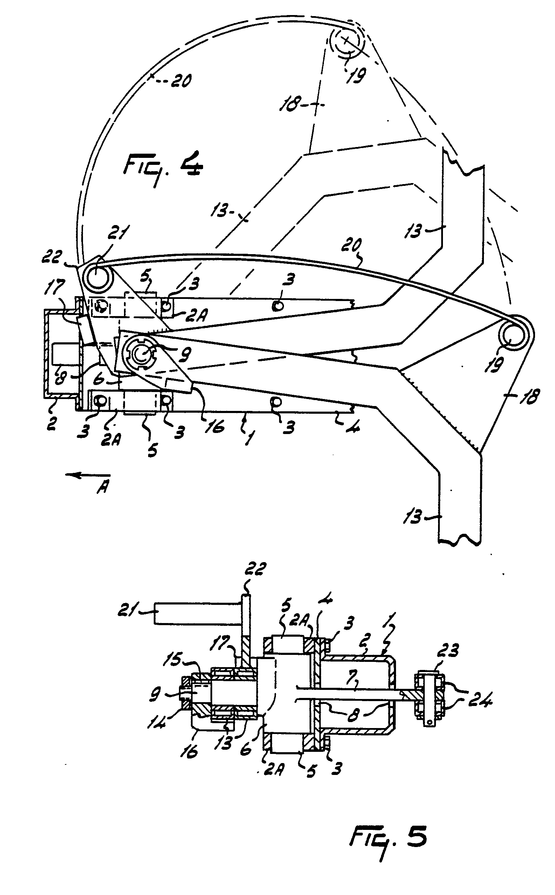

Figure 4 is a view, on an enlarged scale, taken in the direction of the arrow IV in Figure 1; and

Figure 5 is a sectional view taken on the line V—V in Figure 1.

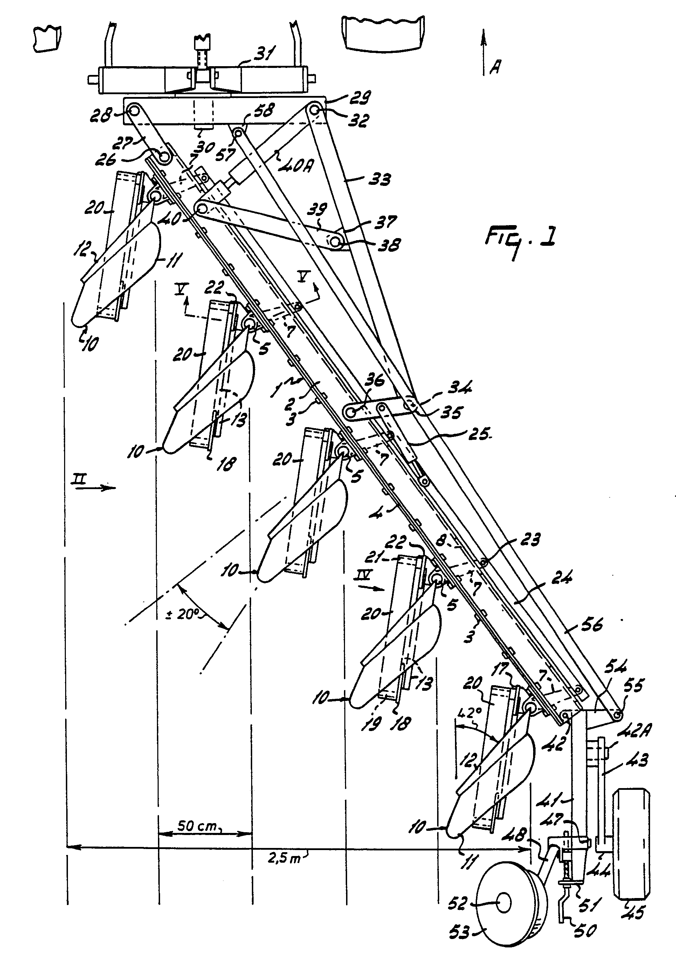

The plough shown in the Figures is a multi-share reversible plough and comprises a substantially horizontal main frame beam 1, the longitudinal centre line of which is, in the configuration shown in Figure 1, at an angle of about 30° to the intended direction of operative travel of the plough, which is indicated by an arrow A. The main frame beam 1 comprises a U-shaped profile 2 of sheet material which is arranged so that the limbs of the U extend substantially horizontally. The ends of the limbs of the U are turned over at right angles and are fastened by bolts 3 to a plate 4 which extends the full length of the frame beam 1 and is substantially parallel to the web of the U-profile 2 between the limbs.

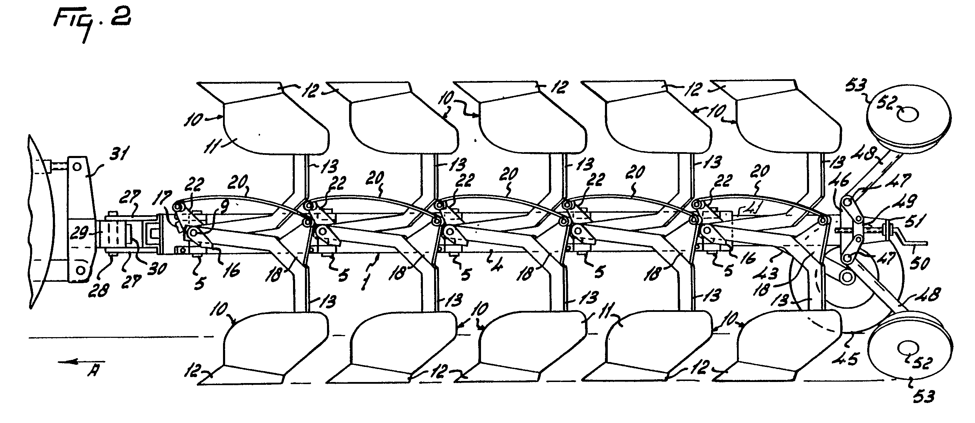

Substantially vertical shafts 5 are evenly distributed along the frame beam 1. They are mounted by means of supports 2A which are secured by the bolts 3. As shown in Figures 1 and 2, five shafts 5 are provided, one being situated near the front end of the main frame beam 1 and one being situated near the rear end.

Each shaft 5 is surrounded by a sleeve 6 between its upper and lower ends. Each sleeve 6 is provided, on the side nearer the main frame beam 1, with a substantially horizontal, flat arm 7. The arm 7 passes through slots 8 in the plate 4 and in the web of the U-profile 2 and projects out of the main frame beam 1.

On the opposite side, the sleeve 6 is provided near the middle with a substantially horizontal shaft 9, the longitudinal centre line of which is in line with the longitudinal centre line of the flat arm 7.

Each shaft 9 constitutes a support for a pair of plough bodies 10 disposed one above the other. The plough bodies of each pair can be used alternately, one working to the right and the other to the left. Working to the left and to the right means that, when travelling in the direction A, a soil slice is displaced to the left or to the right respectively.

Each of the plough bodies 10 comprises a mould board 11 and a share 12 mounted on a supporting arm 13. Each supporting arm 13 extends from its plough body 10 for some distance in a substantially vertical direction downwards or upwards respectively. This vertical part meets, at a sharp bend, a part which slopes upwards or downwards respectively, and forwards and which in turn meets, at a sharp bend, a substantially horizontal, forwardly directed part which is pivotable about the shaft 9 at the front. The end of the shaft 9 is provided by means of a nut 14 and keys 15 with a stop 16, which limits movement of the horizontal part of the supporting arm 13 for the lowermost plough body 10 of each pair during operation.

The stop 16 blocks movement of the front ends of the respective arms 13 about the shaft 9. For the supporting arm 13 of the upper plough body 10 of each pair, a stop 17 mounted on the sleeve 6 is arranged near the other end of the shaft 9 and near the shaft 5.

On the rear of the supporting arm 13 for the lowermost plough body 10, on the inclined part, a support plate 18 is fastened which extends upwardly. Near its upper side the support plate 18 is provided with a plug 19 surrounded by the curved end of a leaf spring 20. The leaf spring 20 extends substantially horizontally and a curved portion at its front end receives a plug 21, which is secured near the top of a lug 22 fastened to the supporting arm 13 for the upper plough body 10 near its front end.

Figure 2 shows that the leaf spring 20 is slightly curved upwardly to create a resilient mechanism which presses the respective supporting arms 13 against the stops 16 and 17 respectively.

Each of the flat arms 7 is pivotally mounted by means of a pin 23 between two spaced hollow profiles which are substantially parallel to the main frame beam 1. These profiles constitute an adjusting rod 24, which is displaceable in a direction substantially parallel to the longitudinal centre line of the main frame beam 1 to turn the sleeves 6 about the shafts 5 and hence to adjust the respective plough bodies 10. The adjusting rod 24, the arms 7 and the shafts 5 constitute an adjusting mechanism for the plough bodies 10. Adjustment can be performed through an angle of about 20°. Viewed on plan, the pivotal axes formed by the shafts 5 are disposed near the foremost tip of the share 12 of the respective plough body. The adjusting rod 24 is pivotally connected to an end of a hydraulic cylinder 25 at a position between the third and fourth pair of plough bodies 10 from the front.

The front end of the main frame beam 1 is pivotally connected by means of an upwardly extending, preferably vertical pin 26 to one end of a link 27 comprising two strips lying one above the other. The other end of the link 27 is pivotally connected by a pin 28, which is parallel to the pin 26, to a substantially horizontal transverse frame beam 29. The link 27 constitutes a short pivotal link for the main frame beam, so that the front end of the frame beam 1 can furthermore move transversely.

A substantially horizontal shaft 30 extending in the direction of movement A connects the transverse frame beam 29 to a trestle 31 provided with three-point fastening means for attaching the plough to the lifting device of a tractor. The end of the transverse frame beam 29 away from the link 27 is pivoted by means of an upwardly extending, preferably vertical, pin 32 to a rearwardly directed control beam 33 extending generally lengthwise of the main frame beam 1. The beam 33 is pivoted at its rear end to one end of an intermediate arm 35 by means of an upwardly extending, preferably vertical, pin 34. The other end of the arm 35 is pivotally connected by means of an upwardly extending, preferably vertical, pin 36 to the main frame beam 1 at its middle. The front end of the adjusting cylinder 25 connected to the adjusting rod 24 is pivoted to the middle of the arm 35 (Figure 1).

Just in front of the mid point of the beam 33, on the side facing the main frame beam 1, the beam 33 is provided with a lug 37 which is connected by an upwardly extending, preferably vertical, pin 38 to one end of a connecting part 39. The other end of the connecting part 39 is pivotally connected by a pin 40, which is parallel to the pin 38, to the main frame beam 1. The pin 40 is ahead of the pin 38 on the beam 33, approximately level with the front pair of plough bodies 10.

Between the pivotal connection between the transverse frame beam 29 and the rearwardly extending beam 33 and the pivotal connection between the main frame beam 1 and the connecting piece 39, there is a hydraulic cylinder 40A. At its rear end the main frame beam 1 is provided with a rearwardly directed arm 41 which is pivotable about a substantially vertical pin 42 with respect to the main frame beam 1.

An arm 43 is mounted on the arm 41, on the side away from the plough bodies 10, by means of a substantially horizontal shaft 42A extending transversely of the direction A. A shaft 44 is provided at the end of the arm 43 and extends transversely of the direction A. The shaft 44 carries a ground wheel 45. Near its free end, the arm 41 is provided with an upwardly extending support 46 extending both above and below the arm 41. Near its top and bottom ends, the support 46 is provided with shafts 47 extending transversely of the direction A. Each shaft 47 carries a crank 48. At their adjacent ends, the cranks 48 each comprise a short arm which is pivotally connected to a part 49 located centrally between the shafts 47 and having a screw-threaded opening, through which passes the end of a screw spindle 50. The screw spindle 50 is supported by a support 51 provided on the arm 41.

The respective cranks 48 also each comprise a long arm which slopes to the rear and is provided at its free end with a shaft 52. The longitudinal axes of the shafts 52 lie, in operation, in a plane extending substantially transversely of the direction A. The longitudinal centre lines of the respective shafts 52 are at an angle of about 45° to the horizontal.

Each shaft 52 carries a supporting member 53 in the form of a wheel having a peripheral flange and a frustoconical face having vertex angle of about 20° in a manner such that, during operation, the circumferential face can bear on the inner side of a furrow. This supporting member is thus able to absorb lateral reactive forces exerted on the plough by the plough bodies 10. The supporting members 53 in the form of wheels mean that plough bodies can be used without sole irons so that adjustability about the upwardly extending shafts 5 is not hindered.

At its front end the arm 41 has a support 54, which is pivotally connected by an upwardly extending, preferably substantially vertical, pin 55 to a forwardly extending adjusting rod 56. At its front end, the adjusting rod 56 is pivotally connected by a pin 57 arranged in the same manner as the pin 55 in a lug 58 provided near the middle of the transverse frame beam 29 on its rear side. The adjusting rod 56 is inclined at an acute angle to the main frame beam 1 (Figure 1). Between the transverse frame beam 29 and the trestle 31 there is a reversal mechanism of known construction (not shown) so that, at the end of each working run, the plough can be lifted and reversed to bring the previously upper plough bodies into the lower position so that the plough is ready for right-hand working.

For operation, the trestle 31 is attached to a three-point lifting device of a tractor and the hydraulic adjusting cylinders 25 and 40 are connected through ducts (not shown in detail) to the hydraulic system of the tractor.

The working depth can be set in a manner not shown with the aid of the ground wheel 45. The plough, in the configuration shown in Figure 1, can be moved in the direction A, in which case the working plough bodies 10 displace the soil to the left. Each of the plough bodies 10 is constructed so that the mould board 11 projects laterally beyond the share towards the unworked soil so that the upright wall of the furrow which is formed has at least partly an inclined form in the direction towards the soil to be still ploughed.

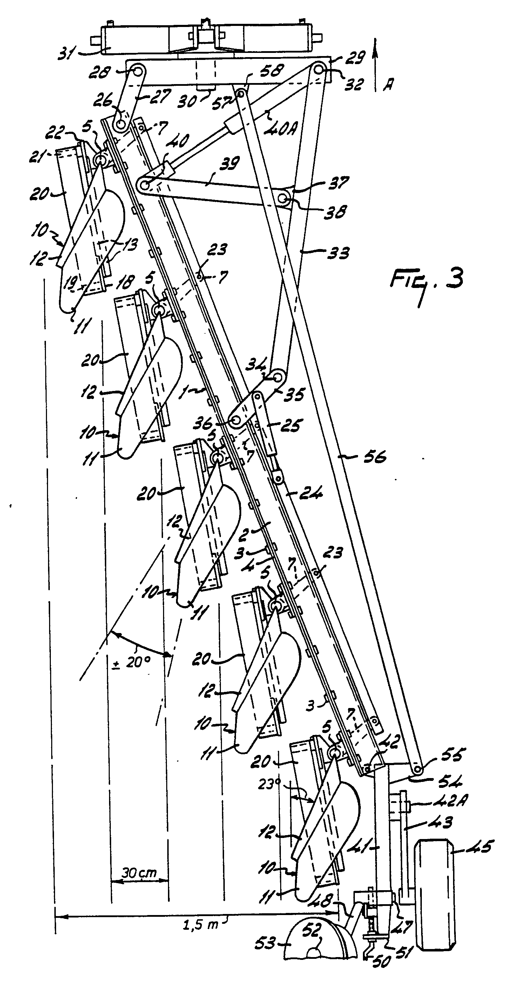

The working width of the plough when the main frame beam 1 occupies the position indicated in Figure 1 can be reduced by turning the main frame beam 1 about the short pivotal link formed by the longitudinal axes of the pins 26 and 28 and the link 27. This adjustment can be performed from the tractor by actuating the adjusting cylinder 40A. When this cylinder is actuated the main frame beam 1 starts turning and at the same time moves laterally, so that eventually the frame beam 1 reaches the position shown in Figure 3.

The specific support of the frame beam by the spaced pivotal pins 26 and 28, the beam 33, the intermediate arm 35 and the connecting part 39 means that both the front and rear ends of the main frame beam are displaced upon adjustment, the rear end of the main frame beam being displaced further than the front end. During displacement of the main frame beam, the connecting part 39 and the beam 33 act as a guide so that accurate displacement of the main frame beam and thus accurate setting of the desired working width are obtainable. Since the front end of the main frame beam 1 moves during shift towards the direction of the frame beam (Figures 1 and 3) the plough in the position shown in Figure 3 occupies a favourable position relatively to the tractor for transport purposes.

In the starting position indicated above (Figure 1), in which the working width of the plough is largest (2.50 metres), each plough body 10 is oriented such that a strip of 50 cms is engaged and its front face is inclined at an angle of about 42° to the direction A. During the swing of the main frame beam 1 and hence of the beam 33 connected by the intermediate arm 35 to the main frame beam 1, a force is exerted on the adjusting rod 24 which turns the plough bodies 10, via the arms 7, simultaneously through about 20° about axes provides by the shafts 5 so that they eventually reach the position shown in Figure 3. In this position the orientation of the plough bodies 10 is again adapted as far as possible to the set working width, and the front faces of the plough bodies are inclined at an angle of about 23° to the direction A, so that they each engage a strip of about 30 cms, the working width of the plough being 1.50 metres. The assembly is dimensioned and constructed so that even in intermediate positions of the main frame beam 1 the plough bodies 10 assume the most advantageous orientation. If it is desired to work other kinds of soil or if weather conditions are different, the orientation of the plough bodies 10 can be further adjusted by means of the adjusting cylinder 25. This can also be done to work at a higher or lower speed or to vary the required power.

The adjusting rod 56 is arranged so that when the main frame beam 1 turns the orientation of the rearwardly extending arm 41 remains the same with respect to the direction A, that is to say substantially parallel to the direction A.

If, during operation, the operative plough body 10 of one of the pairs strikes an obstacle, this plough body can deflect upwardly by pivoting of the supporting arm 13 about its shaft 9. During this deflection, the position of the upper, inoperative plough body 10 is substantially unchanged. In this manner, with the aid of a single spring mechanism comprising the substantially horizontal leaf spring 20, such a deflection of a plough body 10 can be obtained that it can readily return to its original position, since the displacement is relatively small.

The screw spindle 50, which is readily accessible owing to its rearwardly directed disposition, enables the position of the supporting members 53 to be adapted to prevailing conditions.

As stated above, at the end of each working run, the plough is lifted and a reverse of about 180° can be performed by means of a known reversing mechanism (not shown in detail) so that the other plough body 10 of each pair, working to the right-hand side, can be put into operation. At the same time, the ground wheel 45 has to be turned about the transverse shaft 42A and is put into a new working position, after which, as the case may be, the newly operative supporting member 53 can still be adjusted.

## Claims

1. A plough comprising a main frame beam (1), to which a plurality of plough bodies (10) is pivotally attached and which is adjustably connected to a transverse frame beam (29) that can be coupled to a tractor, said connection between the main frame beam and the transverse frame beam being formed by a link (27) pivotally attached about a first upwardly extending axis (28) at or near one end of the transverse frame beam and a second upwardly extending axis (26) at the main frame beam, said plough further comprising a control beam (33) that is pivotally connected at its front end to the transverse frame beam (29) at or near the end away from the pivotal connection between the pivotal link (27) and the transverse frame beam (29) and at its rear end to an adjusting mechanism (24, 7, 5) for simultaneously adjusting the orientation of the plough bodies (10) when the working width of the plough is changed by varying the inclination of the main frame beam (1) with respect to the intended direction (A) of operative travel of the plough characterised in that the rear end of the link (27) is connected to the main frame beam at the front end thereof and in that the control beam (33) in addition is pivotally connected at its rear end to the main frame beam (1) by an intermediate arm (35) at a position approximately midway along the length of the said main frame beam (1).

2. A plough as claimed in claim 1, characterized in that a pivotal connecting part (39) is provided between the said control beam (33) and the front part of the main frame beam (1), whereby a hydraulic adjusting cylinder (40A) is provided between the pivotal connection between the control beam (33) and the said transverse frame beam (29) and the pivotal connection between the connecting part (39) and the said main frame beam (1).

3. A plough as claimed in claim 1 or 2, characterized in that the plough bodies (10) are simultaneously adjustable about respective upwardly extending axes (5) to vary the angle between the front face of each plough body (10) and the intended direction (A) of operative travel of the plough, and in that the said adjusting mechanism for the simultaneous adjustment of the plough bodies (10) comprises an adjusting rod (24) extending along the said main frame beam (1) and being connected to the said intermediate arm (35).

4. A plough as claimed in claim 3, characterized in that a hydraulic adjusting cylinder (25) is provided between the said adjusting rod (24) and the said intermediate arm (35).

5. A plough as claimed in claim 3 or 4, characterized in that with the plough in a configuration providing a maximum working width, the front face of a plough body (10) is at an angle of about 42° to the intended direction (A) of operative travel of the plough, whereas with the plough in a configuration providing a minimum working width, the front face of the plough body (10) is at an angle of about 23° to the direction (A).

6. A plough as claimed in any one of the preceding claims, characterized in that the plough is provided with a ground wheel (45) and a supporting member (53) for absorbing lateral forces being mounted for pivotal movement together about an upwardly extending axis (42) with respect to the frame.

7. A plough as claimed in claim 6, characterized in that the said ground wheel (45) and the said supporting member (53) are mounted on a rearwardly extending arm (41) which is adjustable by means of an adjusting rod (56) extending generally in the longitudinal direction of, but inclined to, the main frame beam (1) and which is pivotally connected to the said transverse frame beam (29).

8. A plough as claimed in claim 7, characterized in that the pivotal connection between the transverse frame beam (29) and the adjusting rod (56) is near the mid point of the transverse frame beam (29).

9. A plough as claimed in any one of claims 6 to 8, characterized in that it is constructed as a reversing plough comprising at least one pair of plough bodies (10), the said ground wheel (45) being pivotable about a substantially horizontal axis (42A) between two working positions and the two said supporting members (53) being disposed one above the other, each being rotatable about a rotary axis (52), these rotary axes (52) lying in a plane extending transversely of the intended direction (A) of operative travel of the plough.

10. A plough as claimed in claim 9, characterized in that the rotary axes (52) of the supporting members (53) are inclined to the horizontal.

11. A plough as claimed in any one of claims 6 to 10, characterized in that the supporting members (53) comprise wheels having frustoconical periphery.

12. A plough as claimed in any one of claims 6 to 11, characterized in that the supporting members (53) are adjustable by means of a substantially horizontal screw-threaded spindle (50).

13. A plough as claimed in any one of claims 9 to 12, characterized in that the said transverse frame beam (29) is adjustable about a substantially horizontal axis (30) with respect to a trestle (31) provided with three-point fastening means for attaching the plough to the three-point lifting device of a tractor.

## Patentansprüche

1. Pflug mit einem Hauptrahmenträger (1), an dem eine Mehrzahl von Pflugkörpern (10) schwenkbar angebracht und mit einem mit einer Zugmaschine koppelbaren Querrahmenträger (29) verstellbar verbunden sind, wobei die Verbindung zwischen dem Hauptrahmenträger und dem Querrahmenträger durch ein Verbindungsglied (27) gebildet ist, das an oder nahe bei einem Ende des Querrahmenträgers um eine erste, sich nach oben erstreckende Achse (28) schwenkbar angebracht ist sowie an dem Hauptrahmenträger um eine zweite, sich nach oben erstreckende Achse (26) schwenkbar angebracht ist, wobei der Pflug außerdem einen Steuerträger (33) umfaßt, der an seinem vorderen Ende mit dem Querrahmenträger an oder nahe bei dessen von der Schwenkverbindung zwischen dem Schwenkglied (27) und dem Querrahmenträger (29) abgelegenen Ende schwenkbar verbunden ist und an seinem hinteren Ende mit einem Verstellmechanismus (24, 7, 5) schwenkbar verbunden ist, der zum gleichzeitigen Verstellen der Ausrichtung der Pflugkörper (10) ausgelegt ist, wenn die Arbeitsbreite des Pfluges durch Verändern der Neigung des Hauptrahmenträgers (1) in bezug auf die beabsichtigte Betriebsbewegungsrichtung (A) des Pfluges geändert wird, dadurch gekennzeichnet, daß das hintere Ende des Verbindungsglieds (27) mit dem Hauptrahmenträger an dessen vorderem Ende verbunden ist, und daß der Steuerträger (33) außerdem an seinem hinteren Ende durch einen Zwischenarm (35) an einer in etwa auf halbem Wege der Länge des genannten Hauptrahmenträgers (1) gelegenen Stelle mit dem Hauptrahmenträger (1) schwenkbar verbunden ist.

2. Pflug nach Anspruch 1, dadurch gekennzeichnet, daß ein Schwenkverbindungsteil (39) zwischen dem genannten Steuerträger (33) und dem vorderen Teil des Hauptrahmenträgers (1) vorgesehen ist, wobei ein hydraulischer Verstellzylinder (40A) zwischen der Schwenkverbindung zwischen dem Steuerträger (33) und dem genannten Querrahmenträger (29) und der Schwenkverbindung zwischen dem Verbindungsteil (39) und dem genannten Hauptrahmenträger (1) vorgesehen ist.

3. Pflug nach Anspruch 1 oder 2, dadurch gekennzeichnet, daß die Pflugkörper (10) zum Variieren des Winkels zwischen der Frontfläche jedes Pflugkörpers (10) und der beabsichtigten Betriebsbewegungsrichtung (A) des Pfluges je um eine sich nach oben erstreckende Achse (5) gleichzeitig verstellbar sind, und daß der genannte Verstellmechanismus zum gleichzeitigen Verstellen der Pflugkörper (10) eine Verstellstange (24) umfaßt, die sich entlang des genannten Hauptrahmenträgers (1) erstreckt und mit dem genannten Zwischenarm (35) verbunden ist.

4. Pflug nach Anspruch 3, dadurch gekennzeichnet, daß ein hydraulischer Verstellzylinder (25) zwischen der genannten Verstellstange (24) und dem genannten Zwischenarm (35) vorgesehen ist.

5. Pflug nach Anspruch 3 oder 4, dadurch gekennzeichnet, daß bei in einer Konfiguration zur Schaffung der maximalen Arbeitsbreite befindlichem Pflug die Frontfläche eines Pflugkörpers (10) in einem Winkel von ca. 42° zu der beabsichtigten Betriebsbewegungsrichtung (A) des Pfluges angeordnet ist, während bei in einer Konfiguration zur Schaffung der minimalen Arbeitsbreite befindlichem Pflug die Frontfläche des Pflugkörpers (10) in einem Winkel von ca. 23° zu der Richtung (A) angeordnet ist.

6. Pflug nach einem der vorausgehenden Ansprüche, dadurch gekennzeichnet, daß der Pflug mit einem Bodenrad (45) und einem Stützglied (53) zum Aufnehmen seitlicher Kräfte versehen ist, die um eine sich nach oben erstreckende Achse (42) in bezug auf den Rahmen gemeinsam verschwenkbar angebracht sind.

7. Pflug nach Anspruch 6, dadurch gekennzeichnet, daß das genannte Bodenrad (45) und das genannte Stützglied (53) an einem sich nach hinten erstreckenden Arm (41) angebracht sind, der mittels einer Verstellstange (56) verstellbar ist, die sich im wesentlichen in Längsrichtung des Hauptrahmenträgers (1), jedoch schräg zu diesem verlaufend, erstreckt und mit dem genannten Querrahmenträger (29) schwenkbar verbunden ist.

8. Pflug nach Anspruch 7, dadurch gekennzeichnet, daß sich die Schwenkverbindung zwischen dem Querrahmenträger (29) und der Verstellstange (56) nahe bei dem Mittelpunkt des Querrahmenträgers (29) befindet.

9. Pflug nach einem der Ansprüche 6 bis 8, dadurch gekennzeichnet, daß er als Wechselpflug mit wenigstens einem Paar von Pflugkörpern (10) ausgebildet ist, wobei das genannte Bodenrad (45) um eine im wesentlichen horizontale Achse (42A) zwischen zwei Arbeitspositionen verschwenkbar ist und die beiden Stützglieder (53) übereinander angeordnet sind und jedes um eine Drehachse (52) drehbar ist, wobei diese Drehachsen (52) in einer sich quer zu der beabsichtigten Betriebsbewegungsrichtung (A) des Pfluges erstreckenden Ebene liegen.

10. Pflug nach Anspruch 9, dadurch gekennzeichnet, daß die Drehachsen (52) der Stützglieder (53) zur Horizontalen geneigt sind.

11. Pflug nach einem der Ansprüche 6 bis 10, dadurch gekennzeichnet, daß die Stützglieder (53) Räder mit kegelstumpfförmigem Umfang umfassen.

12. Pflug nach einem der Ansprüche 6 bis 11, dadurch gekennzeichnet, daß die Stützglieder (53) mittels einer im wesentlichen horizontalen, mit einem Schraubgewinde versehenen Spindel (50) verstellbar sind.

13. Pflug nach einem der Ansprüche 9 bis 12, dadurch gekennzeichnet, daß der genannte Querrahmenträger (29) um eine im wesentlichen horizontale Achse (30) in bezug auf ein Gestell (31) verstellbar ist, das mit einer Dreipunkt-Befestigungseinrichtung zum Anbringen des Pfluges an der Dreipunkt-Hebeeinrichtung einer Zugmaschine versehen ist.

**Revendications**

1. Charrue comprenant une poutre principale (1) du chassis, à laquelle est attachée de manière pivotante une pluralité de corps de charrue (10), et qui est reliée de façon réglable à une poutre transversale (29) du chassis, laquelle peut être attelée à un tracteur, ladite liaison entre la poutre principale du chassis et la poutre transversale du chassis étant constituée par une bielle de liaison (27) attachée de façon pivotante autour d'un premier axe (28) qui s'étend vers le haut, sur une extrémité de la poutre transversale du chassis ou bien près de ladite extrémité, et autour d'un deuxième axe (26) s'étendant vers le haut, sur la poutre principale du chassis, ladite charrue comprenant en outre une poutre de commande (33) qui est reliée de manière pivotante sur son extrémité antérieure à la poutre transversale (29) du chassis, à l'extrémité de cette poutre éloignée de l'articulation entre la bielle de liaison pivotante (27) et la poutre transversale (29) du chassis, ou bien près de ladite extrémité, et sur son extrémité postérieure à un mécanisme de réglage (24, 7, 5) pour régler simultanément l'orientation des corps de charrue (10) quand on modifie la largeur de travail de la charrue en faisant varier l'inclinaison de la poutre principale (1) du chassis par rapport au sens de marche (A) prévu pour le travail de la charrue, caractérisée en ce que l'extrémité postérieure de la bielle de liaison (27) est reliée à la poutre principale (1) du chassis sur l'extrémité antérieure de celle-ci, et en ce que la poutre de commande (33) est en outre reliée de manière pivotante sur son extrémité postérieure à la poutre principale (1) du chassis par un bras intermédiaire (35) en une position approximativement à mi-chemin de la longueur de ladite poutre principale (1) du chassis.

2. Charrue selon la revendication 1, caractérisée en ce qu'une pièce de liaison pivotante (39) est prévue entre ladite poutre de commande (33) et la partie antérieure de la poutre principale (1) du chassis, un vérin hydraulique de réglage (40A) étant prévu entre l'articulation de la poutre de commande (33) sur ladite poutre transversale (29) du chassis et l'articulation de la pièce de liaison (39) sur ladite poutre principale (1) du chassis.

3. Charrue selon la revendication 1 ou 2, caractérisée en ce que les corps de charrue (10) sont simultanément réglables autour d'axes respectifs (5) s'étendant vers le haut pour faire varier l'angle entre la face antérieure de chaque corps de charrue (10) et le sens de marche (A) prévu pour le travail de la charrue, et en ce que ledit mécanisme de réglage pour le réglage simultané des corps de charrue (10) comprend une tringle de réglage (24) s'étendant le long de ladite poutre principale (1) du chassis et reliée audit bras intermédiaire (35).

4. Charrue selon la revendication 3, caractérisée en ce qu'un vérin hydraulique de réglage (25) est prévu entre ladite tringle de réglage (24) et ledit bras intermédiaire (35).

5. Charrue selon la revendication 3 ou 4, caractérisée en ce que, la charrue étant dans une configuration procurant une largeur maximum de travail, la face antérieure d'un corps de charrue (10) est à un angle d'environ 42° par rapport au sens de marche (A) prévu pour le travail de la charrue, tandis que lorsque le charrue est dans une configuration procurant une largeur minimum de travail, la face antérieure du corps de charrue (10) est à un angle d'environ 23° par rapport au sens de marche (A).

6. Charrue selon l'une quelconque des revendications précédentes, caractérisée en ce qu'elle est munie d'une roue (45) portant sur le sol et d'un organe de soutien (53) pour absorber les forces latérales, monté, ainsi que ladite roue (45), de manière à pivoter ensemble par rapport au chassis autour d'un axe (42) s'étendant vers le haut.

7. Charrue selon la revendication 6, caractérisée en ce que ladite roue (45) portant sur le sol et ledit organe de soutien (53) sont montés sur un bras (41) s'étendant vers l'arrière, qui est réglable au moyen d'une tringle de réglage (56) s'étendant généralement dans le sens longitudinal de la poutre principale (1) du chassis, mais en étant inclinée par rapport à celle-ci, et étant reliée de manière pivotante à ladite poutre transversale (29) du chassis.

8. Charrue selon la revendication 7, caractérisée en ce que la liaison pivotante entre la poutre transversale (29) du chassis et la tringle de réglage (56) est située près du point milieu de la poutre transversale (29) du chassis.

9. Charrue selon l'une quelconque des revendications 6 à 8, caractérisée en ce qu'elle est construite comme une charrue réversible comprenant au moins une paire de corps de charrue (10), ladite roue (45) portant sur le sol étant pivotante autour d'un axe (42A) sensiblement horizontal entre deux positions de travail, et lesdits deux organes de soutien (53) étant disposés l'un au dessus de l'autre, chacun tournant autour d'un axe de rotation (52), ces axes de rotation (52) étant situés dans un plan transversal au sens de marche (A) prévu pour le travail de la charrue.

10. Charrue selon la revendication 9, caractérisée en ce que les axes de rotation (52) des organes de soutien (53) sont inclinés par rapport à l'horizontale.

11. Charrue selon l'une quelconque des revendications 6 à 10, caractérisée en ce que les organes de soutien (53) comprennent des roues ayant une périphérie tronconique.

12. Charrue selon l'une quelconque des revendications 6 à 11, caractérisée en ce que les organes de soutien (53) sont réglables au moyen d'une tige filetée (50) sensiblement horizontale.

13. Charrue selon l'une quelconque des revendications 9 à 12, caractérisée en ce que ladite poutre transversale (29) du chassis est réglable autour d'un axe (30) sensiblement horizontal, par rapport à une chèvre (31) munie de moyens d'attelage en trios points pour atteler la charrue au dispositif de relevage en trois points d'un tracteur.

FIG. 1

Fig. 2

Fig. 3

FIG. 4

FIG. 5